# EUROPEAN PATENT APPLICATION

(11) **EP 1 939 265 A1**
(43) Date of publication of application: **02.07.2008**
(21) Application number: 06127199.5
(22) Date of filing: 27.12.2006
(51) Int. Cl.: C09K 8/487, C09K 8/493, C04B 24/26

(54) **Gas migration prevention solid additive based on crossilinked PVA micro-gel for cementing applications**

(71) Applicant: Services Pétroliers Schlumberger, 75007 Paris (FR); Schlumberger Technology B.V., 2514 JG The Hague (NL); Schlumberger Holdings Limited, Road Town, Tortola (VG); PRAD Research and Development N.V., Willemstad, Curacao (AN)
(72) Inventor: Barlet-Gouédard, Véronique, 92290, Chatenay-Malabry (FR); Ermel, Michel, 78740, Saint Lambert des Bois (FR); Daniel, Sylvie, 91570, Bièvres (FR)
(74) Representative: Hyden, Martin Douglas

(57) **Abstract**

A gas migration prevention additive for use in cementing wells comprising a solid crosslinked poly(vinyl)alcohol microgel.

## Description

### Technical field

This invention relates to a gas migration solid additive used in the cementing of the annulus surrounding the casing of oil, gas, water, geothermal or analogous wells. In particular the invention relates to solid additives based on crosslinked poly(vinyl)alcohol microgel and methods of producing the additive.

### Background art

Cementing a well generally comprises pumping cement slurry from the surface down the casing so that it then returns to the surface via the annulus between the casing and the borehole. One of the purposes of cementing a well is to isolate the different formation layers traversed by the well to prevent fluid migration between the different geological layers or between the layers and the surface. In particular, it is essential from the point of view of safety, to prevent any gas rising through the annulus between the borehole wall and the casing. It is therefore important that the rheology of the cement slurry is carefully controlled.

When the cement has set, it is impermeable to gas. Because of the hydraulic pressure of the height of the cement column, the injected liquid slurry is also capable of preventing gas migration. However there is a critical phase between these two states, which lasts several hours during which the cement slurry no longer behaves as a liquid but also does not yet behave as an impermeable solid. For this reason the industry has developed a series of additives which are intended to maintain a gas-tight seal during the whole cement setting period.

Fluid loss is an important property to control in cement slurries. Fluid loss occurs when the cement slurry comes into contact with a highly porous or a fissured formation. Fluid from the cement slurry will migrate into the formation altering the properties of the slurry. When fluid loss occurs, it makes the cement more permeable to gas. Fluid loss control additives are used to prevent or at least limit the fluid loss that may be sustained by the cement slurry during placement and its setting.

One type of additive currently used to prevent gas migration includes liquid gas-tight additives based on a cross-linked poly(vinyl)alcohol microgel such as that described in US 5594050. US 6180689 describes a fluid loss agent comprising a liquid additive based on a crosslinked poly(vinyl)alcohol micro-gel and surfactant such as poly(vinyl)pyrrolidone for use in a cement slurry.

However, in locations where the climate is cold, such as Russia, Alaska, and Canada for example, these liquid additives are not appropriate. In cold climates the liquid additives are difficult to handle as they become hard and therefore are not as pourable which can lead to difficulties in proper mixing in the cement slurry.

Therefore the invention proposes using a solid gas migration prevention additive based on crosslinked poly(vinyl)alcohol microgel which can be blended with the dry constituents of the cement slurry and a method of producing the solid additive. The additive can be used in low temperature climates.

### Disclosure of the invention

Accordingly a first aspect of the invention is a gas migration prevention additive comprising a solid poly(vinyl)alcohol microgel. Using the additive in a cement mixture it is possible to reduce the fluid loss, and therefore reduce the gas permeability of the cement when setting.

Preferably the solid is a powder.

A method for producing a gas migration additive comprising a solid poly(vinyl)alcohol microgel comprises atomizing a liquid form of a poly(vinyl)alcohol microgel.

A second aspect of the invention comprises a cement slurry comprising a solid poly(vinyl)alcohol microgel.

Preferably the additive is present in the cement slurry at a concentration of about 0.9% bwoc.

The invention also comprises a method of cementing a well at low temperatures comprising adding a gas migration prevention additive as described above to a cement composition prior to pumping the cement into the well. Preferably the temperature is below 0°C. Having the additive as a solid enables easier handling of the solid at low temperatures compared to a liquid, which has a freezing point.

Another aspect of the invention is a method of preparing a cement slurry for use in cementing wells comprising blending the additive as described above with the other solid constituents of the slurry.

### Brief description of the drawings

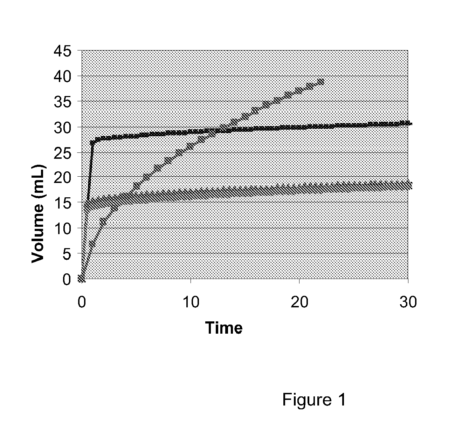

Figure 1 shows a graph of the performance at 71°C[160°F] of the microgel solid additive of the invention in 15.8 Ib/gal slurries prepared with freshwater and class G cement, a reference liquid additive and a conventional solid fluid loss control agent. ▲ reference liquid additive - 1.2 gal/sk, ■ solid additive - 1.2 gal/sk equivalent, • solid additive - 1.35 gal/sk equivalent, ■ conventional solid fluid loss control agent.

### Detailed description of the invention and examples

### Preparation of a solid additive according to the invention:

Solid forms of the additive based on crosslinked poly(vinyl)alcohol microgel can be made by the atomisation of the liquid microgel form into a solid form, crosslinking PVA in latex, mixing PVA/latex, crosslinking vinylacetate, preparing polyacetate particles with PVOH/PVP arms, the adsorption of the liquid crosslinked poly(vinyl)alcohol microgel to mineral particles and the adsorption of the liquid crosslinked poly(vinyl)alcohol microgel to PVA particles or such like.

The liquid form of crosslinked poly(vinyl)alcohol microgel can be produced as described in US 5594050 which describes a method for producing liquid forms of crosslinked poly(vinyl)alcohol microgel.

### Comparison of solid additive and a liquid additive based on crosslinked poly(vinyl)alcohol:

A solid additive based on poly(vinyl)alcohol is obtained by drying a liquid gas-tight additive based on crosslinked poly(vinyl)alcohol. The solid additive is compared to the liquid gas-tight additive version at 71°C [160°F]. Rheology and static fluid loss measurements at 71°C [160°F] are shown in Table 1. Figure 1 shows curves describing the evolution of collected volume during fluid loss tests as a function of time. Tests are conducted at 1.2 gal/sk for the liquid reference. At this concentration, the liquid reference provides a given concentration of micro-gel particles (0.8% bwoc). This given concentration of micro-gel particles is used to determine the concentration of the solid additive (also expressed in terms of liquid additive equivalent concentration in Table 1).

The rheology values obtained with the solid additive are similar to those achieved with the liquid reference (Table 1). Both liquid and solid versions exhibit the same fluid loss behaviour, i.e. a spurt and a second phase where the fluid loss rate is very low, due to the sealing of the cement filtercake (see figure 1).

This behaviour is remarkable and is not obtained with solid particles made of silica for example or conventional solid fluid loss additives. This type of behaviour is also always observed with liquid conventional gas-tight additives based on a styrene-butadiene latex for example. Variability in fluid loss control may be due to a dispersion issue as a result of the drying process. Fluid loss control can be improved by increasing the concentration of solid additive by about 10% resulting in performances to match the results obtained with the liquid reference. The solid additive is also very efficient at low concentrations (0.9%bwoc).

**Table 1**

| | Reference liquid additive | Solid additive | |
|---|---|---|---|
| Liquid additive equivalent concentration (gal/sk) | 1.2 | 1.2 | 1.35 |
| Solid concentration (% bwoc) | 0.8 | 0.8 | 0.9 |
| Pv (cP) | 31 | 33 | 29 |
| Ty (lb/100 ft2) | 27 | 20 | 9.8 |
| 10 min gel | 22 | 22 | 17 |
| 1 min stirring | 13 | 16 | 8 |
| API fluid loss (mL) | 37 | 61 | 36 |

| | | | |
|---|---|---|---|
| Performances at 71°C [160°F] of micro-gel solid additive in 15.8 Ib/gal slurries prepared with freshwater and class G cement. | | | |

An advantage of using solid additives over liquid additives is that as they do not contain water they do not form a hard mass in cold climates. In addition as liquid additives are diluted larger volumes of liquid additives are required compared to solid additives. Therefore as smaller volumes of the product are used, this is beneficial in situations where space for storage can be limited, such as on a rig.

Changes can be made while still remaining within the scope of the invention.

## Claims

1. A gas migration prevention additive for use in cementing wells comprising a solid crosslinked poly(vinyl)alcohol microgel.

2. A gas migration prevention additive according to claim 1 wherein the solid poly(vinyl)alcohol microgel is a powder.

3. A cement slurry comprising a gas migration prevention additive as claimed in claims 1 or 2.

4. A cement slurry according to claim 3 wherein the additive is present at a concentration of about 0.9% bwoc.

5. A method for producing a gas migration additive as claimed in claims 1 or 2 comprising atomizing a liquid form of a crosslinked poly(vinyl)alcohol microgel.

6. A method of cementing a well at low temperatures comprising adding a gas migration prevention additive as claimed in claims 1 or 2 to a cement composition prior to pumping the cement the well.

7. A method as claimed in claim 6 wherein the temperature at the surface of the well is about below 0°C.

8. A method of preparing a cement slurry for use in cementing wells comprising blending the additive as claimed in claim 1 or 2 with the other solid constituents of the slurry.
